(19) **Europäisches Patentamt**
**European Patent Office**
**Office européen des brevets**

(11) **EP 4 779 279 A1**

(12) **EUROPEAN PATENT APPLICATION**

(43) Date of publication:
**22.07.2026 Bulletin 2026/30**

(21) Application number: **25152233.0**

(22) Date of filing: **16.01.2025**

(51) International Patent Classification (IPC):
**G01K 7/42** (2006.01) **G01K 13/02** (2021.01)

(52) Cooperative Patent Classification (CPC):
**G01K 7/427; G01K 13/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **SONG, Chen**
**68163 Mannheim (DE)**

• **ACKERMANN, Patric**
**64347 Griesheim (DE)**
• **SCHOCH, Nicolai**
**69120 Heidelberg (DE)**
• **GEBHARDT, Joerg**
**55130 Mainz (DE)**

(74) Representative: **Maiwald GmbH**
**Engineering**
**Elisenhof**
**Elisenstrasse 3**
**80335 München (DE)**

(54) **METHOD FOR DETERMINING A TEMPERATURE OF A MEDIUM**

(57)    The disclosure relates to a method (100) for determining a temperature of a medium (13) within a pipe (12) and/or an inner surface temperature of the pipe (12), the method (100) comprising:
- obtaining temperature measurement data from at least two temperature sensors (21, 22), wherein the temperature measurement data is indicative of a temperature of an outer surface temperature of the pipe (12), measured by the first temperature sensor (21), and further indicative of an ambient temperature of a surrounding of the pipe (12), measured by the second temperature sensor (22); wherein the at least two temperature sensors (21, 22) are provided within a holding element (11);
- processing the temperature measurement data by a First Principal Artificial Intelligence, FP-AI, wherein the processing by the FP-AI comprises a partial differential equation (PDE) and;
- determining the temperature of the medium (13) and/or an inner surface temperature of the pipe (12) from the processing by the FP-AI.

Fig. 2

# Description

## TECHNICAL FIELD

The present invention relates to a method for determining a temperature of a medium within a pipe and/or an inner surface temperature of the pipe, one or more computer program products and a data processing system.

## BACKGROUND

Accurate temperature monitoring of a medium, such as fluids, within piping systems is a critical requirement across various industries, including oil and gas, chemical processing, water treatment, and energy generation. Traditional methods for determining the temperature of a medium flowing through a pipe predominantly rely on invasive temperature sensors, such as thermocouples and Resistance Temperature Detectors, which are commonly used for direct temperature measurement, for example. These sensors are inserted into the fluid stream within the pipe, providing real-time and highly accurate temperature readings. Their direct contact with the medium ensures precise monitoring, which is essential for processes requiring stringent temperature control. However, invasive sensors have several significant drawbacks as they rely on direct contact with the medium, which can lead to sensor degradation, especially when monitoring corrosive or reactive fluids, for example.

However, non-invasive temperature sensors offer an alternative by measuring the temperature of an outer surface of the pipe without direct contact with the internal medium. Therefore, non-invasive temperature sensors are arranged in the surroundings of the pipe. These non-invasive temperature sensors measure the temperature at a point on the outer surface of the pipe, from which the internal fluid temperature is inferred. Under stable operating conditions, e.g., where the fluid temperature remains relatively constant, this approach may yield adequate temperature estimations. However, significant challenges arise during e.g., transient phases characterized by rapid temperature fluctuations within the medium. In these scenarios, the temperature distribution both inside the pipe and on its outer surface undergoes dynamic changes due to ongoing heat transfer processes. These changes are governed by the thermal inertia of the pipe material and the fluid's response to temperature variations. Consequently, the temperature on the pipe's exterior takes a considerable amount of time to stabilize, a phenomenon commonly referred to as the thermalization. The thermalization process is often observed by a slow temperature response time of the non-invasive sensor. A measure for the responsiveness of a sensor is the "T90" time. i.e. the time it takes after a step change in temperature for the sensor reading to reach 90% of the asymptotic temperature (or equilibrium temperature). For pipes made of materials with low thermal conductivity, such as plastic or lined pipes used to transport corrosive fluids, the T90 time can range from 5 to 60 minutes.

The extended T90 time poses a significant limitation for traditional non-invasive temperature measurement systems. During the transition period when the temperature field is stabilizing, the readings from external sensors are unreliable and do not accurately reflect the instantaneous temperature of the medium within the pipe. This inaccuracy impairs the ability of automated control systems to respond promptly and effectively to temperature changes, potentially leading to suboptimal process conditions, safety hazards, and reduced operational efficiency.

Moreover, existing non-invasive sensor systems lack the capability to provide real-time temperature estimations during transient phases, as they rely solely on surface measurements that lag behind the actual fluid temperature changes. This delay is particularly problematic in applications where rapid temperature monitoring and control are essential for maintaining process integrity, ensuring safety, and complying with stringent regulatory standards.

## SUMMARY

The above problem or need is at least partially solved or alleviated by the subject matters of the independent claims of the present disclosure, wherein further examples are incorporated in the dependent claims.

According to an aspect of the present disclosure, there is provided a method for determining a temperature of a medium within a pipe and/or an inner surface temperature of the pipe, the method comprising:

obtaining temperature measurement data from at least two temperature sensors, wherein the temperature measurement data is indicative of a temperature of an outer surface temperature of the pipe, measured by a first temperature sensor, and further indicative of an ambient temperature of a surrounding of the pipe, measured by a second temperature sensor; wherein

the at least two temperature sensors are provided within a holding element;

processing the temperature measurement data by a First Principal Artificial Intelligence, FP-AI, wherein the processing by the FP-AI comprises a partial differential equation (PDE);

determining the temperature of the medium and/or an inner surface temperature of the pipe from the processing by the FP-AI.

A medium may refer to a substance or fluid flowing inside a pipe whose temperature is to be determined and monitored. This medium may vary depending on the specific application and the industry in which the invention may be employed. Examples of such media may include industrial fluids like petroleum products, chemicals, water, wastewater, gases such as natural gas or hydrogen, and specialty fluids used in various industrial processes. A pipe may refer to a pipeline, a conduit or tubing system configured for the transportation of a medium within various industrial applications, for example. A pipe may be a cylindrical vessel constructed from materials such as metal, plastic, or other suitable substances, intended to efficiently channel liquids, gases, or mixtures from one location to another, for example.

A first temperature sensor may refer to a non-invasive temperature sensor that measures the surface temperature of the pipe ($T_{surface}(t)$), or a temperature in the vicinity of the surface, at a specific location. For example, the first temperature sensor may be arranged at a location where it can accurately capture the surface temperature of the pipe. The surface temperature may reflect a heat transfer from the medium inside the pipe through the pipe wall to its outer surface, for example. The first sensor may be in thermal contact with the outer surface of the pipe, avoiding air gaps or insulating materials that could distort readings, for example. A temperature sensor may be a sensor element like a PT100 resistance thermometer, or thermocouple, or a potentially more complex sensor device which uses internal models, or similar, for example.

A second temperature sensor may refer to a temperature sensor that measure an ambient temperature ($T_{ambient}(t)$), or provides an estimate of it. Ambient temperature may refer to the temperature of the environment surrounding the pipe. This temperature may influence heat transfer dynamics between the pipe and its surroundings, for example. It may provide direct or indirect information about external conditions that may influence the heat transfer from the pipe to the environment, for example. Knowing the ambient temperature may allow to account for environmental influences on heat transfer, enhancing the accuracy of the temperature estimation, for example. The second temperature sensor may be arranged such that it is not affected by the heat emitted from the pipe to ensure a precise measurement of the actual ambient temperature. The second temperature sensor may be a sensor element that is directly coupled to the ambient temperature to ensure the most accurate measurement possible. This temperature may influence heat transfer dynamics between the pipe and its surroundings.

Both temperature measurements may be obtained simultaneously or at synchronized intervals, which may be important during transient conditions where temperatures may change rapidly. Synchronized data acquisition may ensure consistency and reliability in subsequent processing steps, for example. The first and the second temperature sensor may be connected through a physical medium, a material or structure with known thermal properties (e.g., thermal conductivity, specific heat capacity). This physical medium may be the holding element, bracket, or any material that links the sensors and has predictable thermal behavior, for example.

The temperature data from both sensors are transmitted to a computing unit equipped with a First Principle Artificial Intelligence (FP-AI). A FP-AI is an advanced computational approach that combines traditional artificial intelligence techniques with fundamental physical laws governing the underlaying system. Unlike conventional AI models that rely solely on data-driven methods, FP-AI integrates first principles, basic and established physical laws such as conservation of energy, mass, and momentum, into its algorithms. This integration enhances the model's predictive accuracy and generalizability, especially in systems where physical laws play a significant role in determining behavior. An example of FP-AI is the Physics-informed neural network (PINN). PINNs are a type of machine learning model that combines neural networks with the constraints of physical laws. By incorporating governing equations into the training process, PINNs can learn to solve complex physical problems without explicitly being programmed with the equations themselves. PINNs achieve this by embedding the partial differential equations (PDEs) into the loss function used to train the network. The loss function penalizes the network for producing solutions that violate the PDEs. This may force the network to learn the underlying physics of the problem, rather than simply fitting to the training data. As a result, PINNs can be more accurate and generalize better than traditional neural networks for problems that are governed by physics.

A Partial Differential Equation (PDE) is a mathematical that describes relations involving the partial derivatives of a function with respect to multiple variables, often used to model physical phenomena like heat, fluid flow, structure deformation. The FP-AI may e.g., incorporate the heat conduction equation, a PDE, into its computational framework to model the heat transfer from the medium inside the pipe through the pipe wall to the external environment. In this example, the heat transfer equation may be adapted for cylindrical coordinates appropriate for pipes, for example. By embedding physical law into the AI model, the FP-AI may ensure that the temperature estimations are consistent with the fundamental principles of thermodynamics and heat transfer, for example. Thus, the incorporation of a PDE may allow the FP-AI to model the physical behavior of heat transfer within the pipe accurately. Specifically, it may enable a simulation of how heat moves from the medium inside the pipe through the pipe wall to the external environment, for example. This modelling may account for the spatial and temporal evolution of temperature within the pipe, reflecting how temperature gradients develop and dissipate over time. Depending on the geometry of the pipe, the heat conduction equation may be adapted. For example, in a case of oval pipes with an elliptical cross-section, the heat equation may become more complex, requiring formulation in elliptical coordinates. Other possible geometries may be rectangular or square pipes, conical pipes, or similar, where the heat equation may be adapted to, e.g., by numerical methods such as Finite Element Methods (FEM). Pipes with variable wall thickness introduce spatially varying thermal conductivity and diffusivity into the heat equation. This variability may be expressed as $\alpha$ $(r,\theta,z)$, where the thermal properties depend on position. Double-walled pipes, with two concentric layers separated by a gap (often filled with insulating air or a cooling fluid), may involve coupled heat equations for each layer, for example. PINNs may be particularly advantageous for these cases because they can adapt to complex systems, combining physical equations with measurement data to provide accurate and efficient solutions, for example.

The processing may involve receiving temperature measurement data from at least two temperature sensors: the first temperature sensor may measure the surface temperature of the pipe, or a temperature in the vicinity of the surface, and the second temperature sensor may measure the ambient temperature of the surrounding environment. The surface temperature measurement may reflect the heat conducted from the medium inside the pipe through the pipe wall to its exterior surface, providing boundary conditions for the heat transfer model, for example. For instance, the surface temperature measured by the first temperature sensor may provide information about the outer boundary of the pipe wall and the ambient temperature measured by the second temperature sensor may represent the environmental conditions influencing convective and radiative heat losses from the pipe to the environment. Using these temperature measurement data as input, the FP-AI may employ computational techniques to solve the PDE, for example. Solving in this case may mean solving the PDE in spatial and axial dimension. From this solution, the desired boundary condition value, e.g., the pipe inner surface temperature or the fluid temperature may be extracted and output to a user or a data processing system, for example. This may involve numerical methods suitable for solving PDEs, such as finite element methods or finite difference methods or similar. Physical properties and parameters of the pipe and the media may be necessary to model heat transfer accurately. These may include pipe material properties such as thermal conductivity, which indicates the ability of the pipe material to conduct heat; specific heat capacity, determining the thermal inertia of the pipe material; and density, used in calculating thermal diffusivity and heat capacity, or similar. Geometric parameters of the pipe, such as inner and outer diameters, wall thickness, and length (if axial heat transfer is considered), or similar, may be considered. Medium properties like thermal conductivity, specific heat capacity, and density, or similar may be considered during processing and may enhance the model's accuracy, particularly if the medium significantly influences heat transfer, for example. Environmental parameters such as the heat transfer coefficient, quantifying convective heat transfer between the pipe's outer surface and the environment, and ambient conditions like wind speed and humidity may affect convective heat transfer and sensor readings and may therefore be considered.

By processing the temperature measurement data through the PDE, the FP-AI may determine the temperature distribution across the pipe wall. This calculation may consider the thermal properties of the pipe material and the environmental conditions, capturing how temperature gradients develop and dissipate over time. Boundary and initial conditions may be included for solving the PDE. The boundary conditions may include the outer surface temperature measured by the first temperature sensor, the ambient temperature measured by the second temperature sensor, the inner surface temperature, and/or the temperature of the medium, which is initially unknown and is the value to be determined. Initial conditions, such as the initial temperature distribution within the pipe wall, may be important for time-dependent modelling of temperature changes, for example. This means they may serve as a starting point for the FP-AI to solve the inverse problem of estimating medium temperature, for example. By incorporating initial conditions, the model may provide precise predictions, particularly during transient phases, and enhances the reliability of non-invasive temperature measurement in low-conductivity materials, for example.

The FP-AI may solve an inverse heat conduction problem. The inverse problem in this context may involve estimating an unknown boundary condition of the heat equation, specifically, the temperature at the inner wall of the pipe, based on observed temperature measurements from within the domain or at specific points, rather than directly solving for the temperature field given all boundary conditions. This approach may leverage observed data in both the spatial domain (e.g., temperature readings at two or more positions on or near the pipe) and the temporal domain (e.g., sequential temperature measurements over time). For instance, by combining measurements from sensors positioned at different locations on the outer surface of the pipe with readings collected at subsequent time intervals FP-AI may infer the inner wall temperature of the pipe and/or the medium temperature by solving the heat equation in a way that adheres to the governing physical laws.

The AI component of the FP-AI may utilize e.g., machine learning algorithms that are informed by the PDE, allowing the FP-AI to learn patterns and improve predictions based on both empirical data, e.g., measurement data, and physical laws, for example. By processing the temperature measurement data in this manner, the FP-AI may estimate the temperature of the medium within the pipe and/or the inner surface temperature of the pipe. The estimations may be consistent with both empirical data from the temperature sensors and the theoretical expectations derived from the physical laws, for example. This approach may ensure that the temperature predictions are physically plausible and adhere to known behaviours of thermal systems, reducing the risk of erroneous or non-physical results.

By utilizing fundamental physical laws in conjunction with empirical data, higher accuracy in temperature estimation compared to traditional methods that rely solely on surface temperature measurements or empirical correlations may be achieved. The PDE may account for heat transfer dynamics within the pipe, leading to precise estimations of the medium's temperature. Traditional non-invasive temperature measurement methods often suffer from slow response times, especially during transient conditions when the medium's temperature changes rapidly. The invention significantly reduces the temperature response time by directly modelling the heat transfer processes using the PDE, enabling timely and accurate temperature estimations even during dynamic operational phases. Further, the integration of physical laws into the AI model may enable for more robust measurements in terms of noise and environmental fluctuations, for example. The PDE-based approach may e.g., accommodate variations in operating conditions, material properties, and environmental factors, ensuring consistent performance and reliability.

Calibration of the temperature sensors may ensure that the sensors provide accurate and consistent measurements over time, directly affecting the reliability and precision of the temperature estimations produced by the FP-AI. For example, calibration may align the sensor outputs with known temperature standards, correcting any deviations or errors that may occur due to manufacturing imperfections, environmental factors, or sensor aging.

The method presented here may be advantageous when pipes are used with low thermal conductivity such as PTFE, or glass fibre reinforced plastic pipes, or similar, which are e.g., used in applications involving corrosive fluids and known to create a pronounced temperature gradient between the inner surface of the pipe and its outer surface, for example. The FP-AI or the PINNs may integrate the detailed thermal properties of a pipe with low thermal conductivity (e.g., PTFE) such as its thermal conductivity, specific heat capacity, and density into their computational frameworks. This integration may ensure that the FP-AI accurately simulates the heat conduction process from the medium inside the pipe through the pipe wall and beyond, providing precise temperature estimations even during rapid temperature fluctuations.

Furthermore, the use of PTFE may minimize thermal contact resistance between the pipe and the temperature sensors, particularly if the sensors are enclosed by the same material. For example, if the holding element comprising the at least two temperature sensors comprise PTFE, this may help minimize thermal contact resistance between the pipe and the holding element. Reducing thermal contact resistance may be important for mitigating measurement discrepancies and enhancing the accuracy of temperature estimations. The at least two temperature sensors can, but do not always have to, be arranged within the holding element.

The method may be adaptable for specific conditions, such as insulated or uninsulated pipes. For insulated pipes, insulation properties like thermal conductivity and thickness may be parameters, and the FP-AI model must account for the reduced heat loss due to insulation, for example. For uninsulated pipes, greater emphasis may be placed on environmental parameters due to increased heat loss, and the model must accurately represent convective and radiative heat losses.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

In an example, the PDE may be a heat equation in parameterized form. This may mean that the FP-AI incorporates the heat conduction equation, customized with specific parameters representing the physical properties and geometry of the pipe system, to model the heat transfer accurately. The heat conduction equation is a PDE that describes how heat diffuses through a material over time due to temperature gradients. In this example, the parameterized heat equation (Equation 1) forms the core of this model:

$$\partial u/\partial t = \alpha \nabla^2 u + f \text{ in } \Omega$$

This equation models the diffusion of heat within a domain $\Omega$ over time.

$\alpha$: Thermal diffusivity of the material, defined as $\alpha = k/\rho c_p$, where:
k: Thermal conductivity of the pipe material.
$\rho$: Density of the pipe material.
$c_p$: Specific heat capacity at constant pressure.
$\nabla^2 u$: Laplacian of u, representing the sum of the second partial derivatives with respect to spatial coordinates (indicating how temperature changes in space).
f: Internal heat generation per unit volume (often zero if there are no internal heat sources).
$\Omega$: The spatial domain of interest (e.g., the pipe wall and/or the additional element brought in contact with the pipe).
u: Denotes the temperature.

This equation is the core PDE used by the FP-AI to model heat transfer within the pipe wall. It captures how temperature evolves over time and space due to conduction and any internal heat sources.

$$u(t = t_0) = u_0 \text{ in } \Omega$$

This equation 2 specifies the temperature distribution at the initial time $t = t_0$. $u_0 = u_{0(x)}$: Initial temperature distribution in the domain $\Omega$.

The initial temperature distribution may be necessary for solving the time-dependent heat equation. It provides the starting point for simulating how temperature changes over time within the pipe wall.

$$U = g_D \text{ on } \Gamma_D$$

This equation 3 specifies the temperature on part of the boundary $F_D$ of the domain $\Omega$ As. Where:

> $g_D = g_D(x,t)$: Prescribed temperature on the boundary.
> $\Gamma_D$: Portion of the boundary where the temperature is unknown.

This condition may be applied where temperature measurements are available, such as the outer surface temperature of the pipe measured by the first temperature sensor, for example. It may incorporate empirical data into the model as boundary conditions.

$$-k \, \partial u/\partial n = g_N \text{ on } \Gamma_N$$

This equation 4 specifies the heat flux across part of the boundary $\Gamma_N$ of the domain $\Omega$. Where:

> $\partial u/\partial n$: Normal derivative of u at the boundary, representing the temperature gradient perpendicular to the surface.
> $g_N = g_N(x,t)$: Prescribed heat flux on the boundary.
> $\Gamma_N$: Portion of the boundary where the heat flux is known.

This condition may be used where the heat flux is specified or can be modeled, such as at the outer surface of the pipe where heat transfer occurs between the fluid and the pipe wall. It may involve convective heat transfer coefficients and the unknown medium temperature, which the method aims to estimate.

For the purposes of this method, the system is time-dependent over a period $t \in [t_0, t_e]$, where $t_0$ is the starting time and $t_e$ is the ending time. The spatial domain is one-dimensional, defined as $x \in \Omega = [0, L]$, representing the material in the radial direction of the pipe, which includes the pipe wall and any additional layers such as insulation or a ring.

At x = 0, the location corresponds to the inner surface of the pipe in contact with the medium, while x = L corresponds to the outer surface of the pipe exposed to the ambient environment. For illustration purposes, the Dirichlet boundary condition is considered to be applied at x = 0 and the Neumann boundary condition applied at x = Lx = L, although they can be interchangeable in practice, and linear combinations of them (mixed boundary conditions) are also possible at each boundary.

In the physical model, the two boundary conditions may be defined as follows:

Dirichlet Boundary Condition (Equation 3): At x = 0, the temperature u equals $g_D$, which represents the temperature of the inner wall. This temperature is often found to be equivalent to the medium temperature inside the pipe. It is the quantity of interest that the method aims to estimate.

Neumann Boundary Condition (Equation 4): At x = L, the outer surface of the pipe, the heat flux may be defined by a convection boundary condition, representing the heat exchange with the ambient environment. This is given by:

$$g_N = h(T_{ambient} - T_s)$$

Here, h is the heat transfer coefficient between the pipe's outer surface and the ambient environment, $T_{ambient}$ is the ambient temperature measured by the second temperature sensor, and $T_s$ is the surface temperature at x = L measured by the first temperature sensor.

With these parameterized equations, the heat transfer behavior within the pipe system can be computed. In traditional approaches, methods such as finite element or finite difference methods are used to solve these equations numerically, provided all parameters are numerically defined. However, in this method, the inner wall temperature ($g_D$) is not directly known and must be estimated based on the external temperature measurements.

To achieve this, the method may employ a Physics-Informed Neural Network (PINN). The objective may be to estimate the inner wall temperature ($g_D$), which is a boundary condition parameter in the physical system. The PINN model may infer this parameter based on sensor measurements over a period of time and known model parameters, such as material properties and geometric dimensions, which are provided by the manufacturer or measured before installation. This estimation is an inverse problem or parameter estimation task, as it involves inferring unknown parameters from observable data.

In this method, the estimation of the boundary condition (the inner wall temperature) for each time step results from a training process of the PINN at each time step, using the parameters listed above and the time-series data from the sensors as training data. The inputs to the PINN model consist of temporal (t) and spatial (x) information, and the output is the corresponding temperature $\theta$, which is equivalent to $g_D$ in Equation 3.

The PINN may process the time-series data of temperature measurements from the sensors, incorporating the physical laws represented by the parameterized heat equation and the boundary and initial conditions. By minimizing the loss function that includes the residuals of the heat equation and discrepancies between the predicted and measured temperatures, the PINN estimates the inner wall temperature.

By incorporating this parameterized heat equation and employing a FP-AI such as the PINN, the method may effectively solve the inverse problem of estimating the inner wall temperature based on external temperature measurements. This integration of physical laws and advanced AI techniques may ensure accurate, reliable, and efficient temperature estimations essential for various industrial applications requiring precise thermal monitoring and control.

Other forms of heat equation may be conceivable for this method, depending on the material of the pipe, geometry, thermal properties, and external influences, for example. For instance, parameterized forms of the cylindrical or multi-layered heat equation may be relevant, allowing adaptation to dynamic conditions, non-uniform materials, and external factors while maintaining compatibility with PINN modeling, for example. However, depending on the application, utilizing different forms of heat equations are conceivable, such as transient heat equation, non linear heat equation, or similar.

The parameterized heat equation, used to model heat transfer in the system, may be expressed in different forms such as, but not limited to the physical form and the non-dimensionalized form. In the physical form, the parameters retain their real-world physical units, such as thermal conductivity in W/(m·K). This form may be directly aligned with practical applications, where measurements from sensors or experiments are in standard physical units. In contrast, the non-dimensionalized form may normalize variables and parameters using characteristic scales, eliminating units and resulting in a dimensionless equation, for example. For instance, temperature might be scaled relative to a reference temperature and a characteristic temperature difference. This approach may simplify the equation mathematically and may be used in computational simulations or theoretical modeling to improve efficiency and generalize the results, for example.

In an example, the FP-AI may model a dynamic evolution of temperature of the medium and/or an inner surface temperature of the pipe along a thermal path. This may mean that the FP-AI does not merely provide a static estimation at a single point in time but actively models how the temperature changes over time within the system, for example. The FP-AI may model the dynamic evolution of temperature along a thermal path (or within a volume) starting from either the liquid or the inner surface of the pipe towards the outer surface of the volume or the end of the thermal path respectively, that is coupled to the ambient air or temperature respectively. From this modeled temperature field, the medium temperature, the inner wall temperature of the pipe and the outer wall temperature of the pipe may be extracted. The FP-AI may achieve this e.g., by integrating the time-dependent heat conduction equation into its computational framework. The FP-AI may utilize time-series data from the temperature sensors, capturing how temperatures change over a period. The first temperature sensor may provide measurements of the surface temperature $T_s(t)$ at the outer surface of the pipe, or a volume close to the outer surface, while the second sensor measures the ambient temperature $T_{ambient}(t)$ or the temperature of a volume much closer to ambient than the first temperature sensor. These time-series data may provide information about transient thermal behaviors, enabling the FP-AI to model dynamic conditions accurately. To estimate the medium's temperature inside the pipe based on external measurements, the FP-AI may solve an inverse problem using a Physics-Informed Neural Network (PINN). The PINN integrates the governing PDEs into the training process, embedding the heat conduction equation and associated boundary and initial conditions into its architecture. The network takes temporal (t) and spatial (x) information as inputs and outputs the corresponding temperature distribution u, or temperature field. The loss function used in training the PINN may penalize the network for producing solutions that violate the PDEs and boundary conditions. This forces the network to learn the underlying physics of the problem rather than merely fitting the training data. By minimizing discrepancies between the predicted and measured temperatures and ensuring compliance with the physical laws, the PINN may effectively estimate the inner wall temperature $(g_D)$. Through iterative, or consecutive estimation cycles, the FP-AI may continuously process new data, updating the temperature predictions at regular intervals. This may allow the method to adapt to changing conditions, providing real-time monitoring and rapid detection of temperature changes, for example. The dynamic modeling may account for various transient conditions, such as sudden changes during start-up or shut-down processes, operational variations in flow rates or medium properties, and environmental fluctuations due to weather conditions, or similar. By modeling the dynamic evolution of temperature, the method may enhance accuracy and predictive capability. It may enable better process control by allowing operators to adjust processes proactively, improving efficiency and safety. Additionally, anomaly detection may be facilitated by identifying unusual temperature changes that may indicate faults or issues, for example. Thus, this dynamic modeling may be important for capturing transient thermal behaviors and provides significant advantages over methods that consider only static conditions, for example. The incorporation of the parameterized heat equation, along with the use of a Physics-Informed Neural Network, may allow to accurately simulate and predict how temperatures change over time within the pipe, leading to improved operational efficiency, and process optimization for example.

In an example, the method may be performed periodically and/or iteratively to continuously determine the temperature of the medium. Periodically may mean that the method may be executed at regular intervals to continuously determine the temperature of the medium within the pipe. This periodic execution may involve regularly collecting temperature data from the sensors installed on the pipe's surface and in the ambient environment. By gathering time-series data at set intervals, the method captures the dynamic changes in temperature that may occur due to variations in operating conditions, environmental factors, or other influences. The First Principle Artificial Intelligence (FP-AI) system processes this new data in each iteration, updating its estimations of the medium's temperature based on the latest measurements. Performing the method iteratively may allow the FP-AI to adapt to new information and refine its predictions over time. This may mean, that the FP-AI processes new data in each iteration, updating temperature estimations regularly, for example. With each new set of measurement data, the FP-AI may re-evaluate the temperature distribution within the pipe by solving the heat equation, incorporating any changes in the measured temperatures, material properties, or environmental conditions. Thus, the FP-AI may refine its predictions over time, improving accuracy as more data becomes available. This continuous updating may enhance the accuracy and reliability of the temperature estimations, ensuring that the system responds promptly to any deviations from expected values. By executing the method periodically and/or iteratively, the FP-AI may provide real-time or near-real-time monitoring of the medium's temperature. This may be particularly important in industrial applications where maintaining specific temperature ranges is important for process efficiency, safety, and product quality. Continuous determination of the temperature may e.g., allow for immediate detection of anomalies or trends that may indicate potential issues, enabling operators to take corrective actions promptly, for example. By repeatedly performing the method, the FP-AI may continuously capture how the temperature changes over time within the system, enhancing its predictive capabilities and allowing for proactive adjustments to maintain optimal operating conditions.

In an example, the processing by the FP-AI may comprises at least one or more of the following: geometry and thermal properties of the pipe and the holding element, the position of the at least two temperature sensors within the holding element, and fluid parameters of the medium. The geometry of the pipe may comprise such as, but not limited to, thickness of the pipe wall, inner and outer diameters, shape (e.g., circular, cylindrical, oval, rectangular cross-sections), and the length. The thermal properties of the pipe may comprise such as, but not limited to, thermal conductivity, specific heat capacity, thermal diffusivity, material type. The thickness, form, and thermal diffusivity of the holding element as well as the position of the two or more temperature sensors may be known from manufacturing. This may mean that these properties of the holding element and the arrangement of the sensors may be defined during the manufacturing process. For example, a specific material with known thermal properties may be chosen to ensure efficient and consistent heat conduction. Similarly, the position of the at least two temperature sensors within the holding element may be determined during manufacturing to optimize the accuracy and reliability of the temperature measurements, for example. Since these parameters may be established during manufacturing, they may be readily available for integration into the FP-AI model, for example.

For example, thermal properties of the medium may include the thermal conductivity, The fluid flow parameters of the medium may encompass e.g., flow rate, flow velocity, turbulence characteristics, and other hydrodynamic properties. The thermal contact resistance between pipe and temperature sensors may account for any resistance to heat flow at the interface between the pipe surface and the temperature sensors due to imperfect contact or surface imperfections, for example. The processing can incorporate one or more additional parameters to enhance the accuracy of the temperature estimations such as thermal diffusivity of the pipe and/or thermal conductivity of the pipe and/or specific heat capacity of the pipe, or similar. By including one or more additional parameters for processing by the FP-AI the accuracy of the temperature estimation may be enhanced. These parameters may e.g., serve to refine the model by accounting for factors that influence heat transfer within the system.

In an example, the FP-AI may take into account a measurement noise and statistics in the processing of the measurement data. Measurement noise may refer to random variations or errors that can occur in sensor readings due to various factors such as sensor precision limits, environmental interference, electrical noise, or mechanical vibrations, for example. These inaccuracies may distort the true temperature signal, leading to less reliable estimations of the medium's temperature within the pipe. By accounting for this noise, the FP-AI may enhance the accuracy and reliability of its temperature estimations, for example. To incorporate measurement noise and statistics, the FP-AI may model the statistical properties of the noise, such as its mean, variance, and distribution, or similar. This modeling may allow the FP-AI to distinguish between actual temperature changes and random fluctuations caused by noise, for example. Techniques like signal filtering and smoothing may be applied to the measurement data to reduce the impact of noise. For example, the FP-AI may use lowpass filters to eliminate high-frequency noise components or employ moving average filters to smooth out short-term fluctuations. Additionally, the loss function used in training the PINN may be designed to penalize deviations not only from the measured temperature data but also from the expected physical behavior, weighted according to the noise level. This may mean that e.g., data points with more noise have less influence on the training process, allowing the FP-AI to focus on the most reliable information. Advanced statistical methods, such as Kalman filtering, or similar, may also be used. A Kalman filter is an algorithm that estimates the state of a dynamic system from a series of incomplete and noisy measurements. It works by combining predictions from the model (in this case, the heat equation) with the actual measurements, producing optimal estimates of the temperature. This approach may not only reduce the influence of noise but also enhances the FP-AI's ability to track temperature changes accurately over time, for example. By incorporating measurement noise and statistical analysis into the processing of measurement data, the FP-AI may enhance its ability to produce accurate and robust temperature estimations even in the presence of noisy data.

In an example, the determined temperature of the medium may be outputted along with an uncertainty score indicative of an estimation accuracy. This may mean that when the FP-AI estimates the temperature of the medium within the pipe, it may also provide a quantitative measure of how confident it is in that estimation, for example. Including an uncertainty score may serve several purposes. For example, it may offer transparency by providing insight into the reliability of the temperature estimation. A user may understand not just what the estimated temperature is but also how accurate that estimation is expected to be. To generate the uncertainty score, the FP-AI takes into account various factors during the processing of measurement data. Measurement noise may be a significant contributor to uncertainty. The FP-AI may model the statistical properties of the noise, such as its mean, variance, and distribution, to quantify how much it might affect the temperature estimation, for example. By understanding the noise characteristics, the FP-AI may adjust its processing to mitigate the impact of noise on the temperature estimations. The FP-AI may also consider model uncertainties. For example, the mathematical models used, such as the heat conduction equation, may have inherent uncertainties due to assumptions or simplifications. The FP-AI may factor in these uncertainties when calculating the confidence in the estimation. Additionally, the quality of the incoming measurement data may be evaluated. If the temperature sensors provide inconsistent readings or there is missing data, the uncertainty score may reflect reduced reliability, for example. Advanced statistical methods, such as Bayesian inference, may be employed to estimate the probability distribution of the temperature. This may provide a formal way to quantify uncertainty, allowing the FP-AI to provide not just a single estimated value but also an associated range within which the true temperature is likely to lie.

In an example, the temperature measurement data comprises a plurality temperature measurement data obtained at different time points. The temperature measurement data may comprise multiple temperature measurements collected at different time points. These temperature measurements may be taken over a period, for example. The plurality temperature measurement data may be obtained synchronized. This may mean, that the plurality of temperature measurement data may be collected at the same or precisely defined time intervals, ensuring that they are temporally aligned. For example, to detect temperature differences, two or more measurements may be collected. With a higher number of measurements, such as but not limited to 10 to 100, the accuracy and informative value of the temperature measurement data may be improved. Therefore, synchronization may ensure inconsistencies that may arise from combining data points taken at different times, which would misrepresent the temporal evolution of the system, for example. This alignment or synchronization may be achieved using a timing protocol, or similar, to coordinate the measurements, for example.

In an example, the first and the second temperature sensors may be arranged at an outer surface of the pipe. The method may be designed to be applicable to both insulated and uninsulated pipes by adjusting the modeling parameters and sensor placement accordingly. The first temperature sensor may measure the outer surface temperature, while the second temperature sensor may measure the ambient temperature at the surroundings of the pipe. This direct placement may allow the FP-AI to accurately model heat transfer from the medium inside the pipe to the environment. Since there is no additional thermal barrier, the heat conduction model remains relatively straightforward, focusing solely on the material properties of the pipe such as thermal conductivity, specific heat capacity, and density. This setup may ensure that the temperature gradient between the medium and the environment is accurately captured, facilitating precise estimation of the medium's temperature. For insulated pipes, an additional layer of insulation surrounds the pipe, introducing extra thermal resistance. In this configuration, the first temperature sensor may be provided directly on the outer surface of the pipe, while the second temperature sensor may be provided on or at the outer surface of an isolating ring that surrounds the pipe, for example. This dual-sensor configuration may be designed to optimize heat transfer modeling and compensate for the thermal resistance introduced by the insulation, thereby enhancing the performance of the FP-AI system, particularly when utilizing PINNs, for example. The first temperature sensor arranged on the outer surface of the pipe or adjacent to it, may measure the pipe's surface temperature. This measurement may provide immediate data on the heat transfer occurring between the medium flowing inside the pipe and the pipe wall or inner surface itself, for example. By capturing the temperature at the pipe's surface, the first temperature may provide insights into how efficiently heat is being conducted from the medium through the pipe material. The second temperature sensor may be arranged on, or near, the outer surface of the isolating ring, measuring the temperature at the outer insulation surface. By measuring the temperature at this position, the temperature gradient established across the insulation layer may be captured. The FP-AI may leverage the measurement data from both sensors to construct a comprehensive model of the heat transfer dynamics within the pipe. Using e.g., a Physics-Informed Neural Networks (PINNs), the FP-AI may estimate a time-dependent thermal field, in a training process, that:

    1. minimizes the difference between the measured temperature data and the calculated temperature at the measurement position

    2. Minimizes the deviation from the PDE. This estimation may allow the FP-AI to accurately infer the temperature of the medium inside the pipe by solving the inverse problem of heat transfer, where the internal temperature is estimated based on external measurements and known physical laws, for example. By having the first temperature sensor arranged at the pipe and second temperature sensor at the isolating ring, the FP-AI may dynamically adjust its models to account for varying thermal conditions and insulation properties. This configuration may e.g., enhance the FP-AIs ability to respond quickly to temperature fluctuations, significantly reducing a response time (T90) compared to traditional non-invasive sensors. For instance, while conventional non-invasive methods may exhibit a response time exceeding 15 minutes, the proposed setup can achieve accurate temperature estimations within approximately 3 minutes on a 3 mm thick PTFE pipe. This rapid response may be important for applications requiring timely temperature monitoring and control, such as handling corrosive fluids or managing processes in environments with low thermal conductivity, for example.

In an example, the first temperature sensor may be arranged at an outer surface of the pipe and the second temperature sensor may be provided within a holding element having surface contact with the outer surface of the pipe. The first temperature sensor may be arranged at an outer surface of the pipe measuring the surface temperature of the pipe. The second temperature sensor may be provided within or at a holding element, such as a sleeve, or an isolation ring, or similar, measuring the temperature at the holding element's surface. This holding element may introduce additional thermal resistance between the pipe and the external environment, thereby creating an intermediary layer. By measuring the temperature within the holding element, the second temperature sensor may provide measurement data on how much heat is being retained or dissipated through the insulation, for example. For example, this setup allows the FP-AI system to rapidly infer the temperature of the medium within the pipe by solving the inverse problem of heat transfer. The combination of measurement data from the first temperature sensor and the second temperature sensor may e.g., enable the FP-AI to integrate these measurements with the governing heat conduction equations, considering the thermal properties of both the PTFE pipe and the isolating ring, for example.

In an example, the temperature measurement data may be further indicative of a temperature measured by a third temperature sensor, said third temperature sensor may be arranged at an intermediate position within the holding element between the first temperature sensor and the second temperature sensor, the third temperature sensor may provide temperature measurement data which is indicative of a temperature at this intermediate position. This arrangement may be designed e.g., to capture a more detailed thermal profile across the pipe and its holding element, thereby providing the FP-AI with more data for more accurate temperature modeling. The first temperature sensor may be arranged directly on, or adjacent to, the outer surface of the pipe, measuring the pipe's surface temperature. This placement may allow for the direct monitoring of heat transfer from the medium flowing inside the pipe to the pipe wall. Given that the pipe is constructed from low thermal conductivity material such as PTFE, the first temperature sensor may capture a temperature. PTFE's properties may ensure that heat transfer from the medium to the pipe's exterior occurs gradually, facilitating a measurable temperature gradient that may be important for precise temperature estimations. The second temperature sensor may be arranged on or at the outer surface of the holding element, such as an isolating ring, that maintains surface contact with the pipe's exterior, for example. This sensor may measure the temperature at the surface of the holding element, providing data on the additional thermal resistance introduced by the insulation and the ambient temperature of the pipe. The third temperature sensor, may be provided within the intermediate region of the holding element, measuring an additional temperature point, or a temperature within the holding element. The inclusion of the third temperature sensor may serve to capture a more detailed temperature gradient across the thermal pathway, for example. This may mean the third temperature sensor may helping to estimate heat transfer through the pipe wall. By determining temperature measurements at three distinct points, the pipe surface, the intermediate location within the holding element, and the outer surface of the holding element, or the ambient temperature of the pipe, the FP-AI may gain a comprehensive thermal profiling. The three temperature sensors may vary in their positioning along the circumferential direction.

In an example, the FP-AI is at least partial pretrained to processes the temperature measurement data. The method presented here enables the medium temperature to be estimated in real time based on the sensor data measured in the real environment. No pre-training of the model is required, as it is a continuous real-time calculation that adapts to the current environmental conditions. However, partial pre-training could be used to shorten the calculation time, for example. This point protects the ability of the system to work directly in the real environment without the need for extensive pre-training datasets or simulations, making the application flexible for different pipe systems. Partial pre-training may refer to a process of training the FP-AI model using historical or simulated data prior to its deployment in the actual physical environment, for example. Therefore, the FP-AI model may undergo partial training using simulated temperature data that mimics the expected thermal behavior of e.g., PTFE pipes under various operating conditions, for example. Partial pre-training may enable the FP-AI to recognize and interpret common patterns in temperature data more quickly. By having a foundational understanding of typical thermal behaviors and responses, the FP-AI may process incoming data streams more efficiently, leading to faster temperature estimations, for example.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

In an example, the data processing system may a holding element comprising at least two temperature sensors, wherein the holding element may be provided at the pipe. The first temperature sensor arranged on the outer surface of the pipe or adjacent to it, may measure the pipe's surface temperature. This measurement may provide immediate data on the heat transfer occurring between the medium flowing inside the pipe and the pipe wall or inner surface itself, for example. By capturing the temperature at the pipe's surface, the first temperature may provide insights into how efficiently heat is being conducted from the medium to the pipe material. The second temperature sensor may be arranged on the outer surface of an isolating ring, measuring the temperature at the outer insulation surface, for example. By measuring the temperature at this position, the temperature gradient established across the insulation layer may be captured. The second temperature sensor may be provided within or at a holding element, such as a sleeve, or an isolation ring, or similar, measuring the temperature at the holding element's surface. By measuring the temperature within the holding element, the second temperature sensor may provide measurement data on how much heat is being retained or dissipated through the insulation, for example. In another embodiment of this invention a third temperature sensor may be provided between the first and the second temperature sensor, for example. This arrangement may be designed e.g., to capture a more detailed thermal profile across the pipe and its holding element, thereby providing the FP-AI with more data for more accurate temperature modeling, for example. The inclusion of the third temperature sensor may be used to capture a temperature gradient across the thermal path more accurately than, for example, the arrangement with only two temperature sensors.

It is noted that the above aspects, examples, and features may be combined with each other irrespective of the aspect involved.

The above and other aspects of the present disclosure will become apparent from and elucidated with reference to the examples described hereinafter.

## BRIEF DESCRIPTION OF THE DRAWINGS

Exemplary embodiments will be further described with reference to Figures, wherein:

Figure 1 shows a system for determining a temperature of a medium within a pipe according to prior art;
Figure 2 shows a system for determining a temperature of a medium within a pipe according to the invention;
Figure 3 shows a method for determining a temperature of a medium within a pipe and/or an inner surface temperature of the pipe; and
Figure 4 shows a data processing system with its elements.

The Figures are schematic only and not true to scale. In principle, identical or like parts, elements and/or steps are provided with identical or like reference numerals in the Figures.

## DETAILED DESCRIPTION OF THE INVENTION

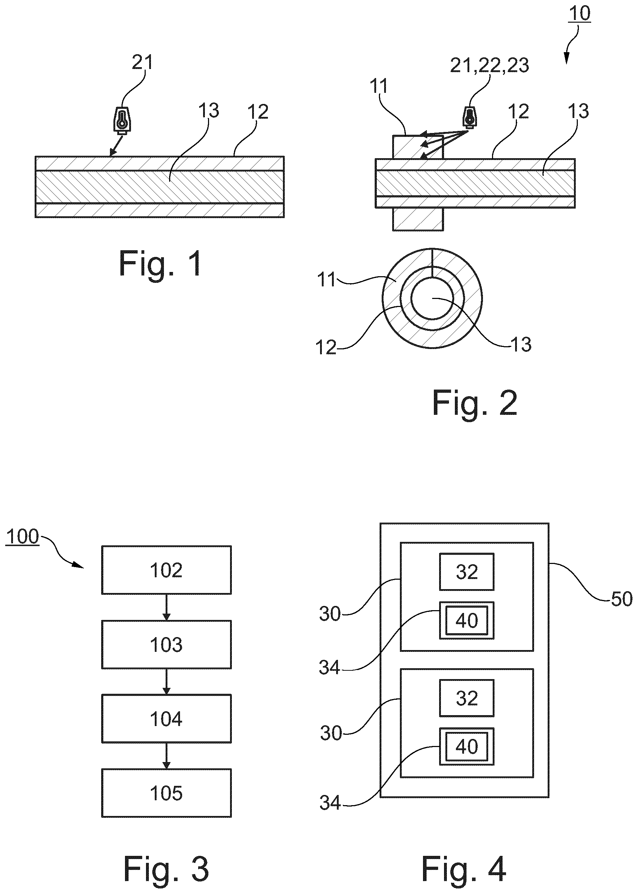

Figure 1 schematically shows a system for determining a temperature of a medium 13 within a pipe 12 according to prior art. In this system, a temperature sensor 21, in particular a non-invasive temperature sensor is employed, which is attached to the outer surface of the pipe 12. The temperature sensor 21 measures one or more temperatures at the outer surface to infer the temperature of the medium 13 flowing inside the pipe 12. When the properties of the pipe 12 such as the pipe material and the characteristics of the fluid flow are known, it may be possible to infer the fluid temperature from these outer surface measurements. This inference works well when the fluid temperature remains relatively constant. However, challenges arise during fluid temperature fluctuations, particularly in transient phases.

In such cases, the temperature distribution within the pipe 12 and on its outer surface may take a significant amount of time to stabilize due to heat transfer processes, a phenomenon known as "slow temperature response time". Only when the temperature on the outer surface of the pipe 21 has stabilized, the measurements from the temperature sensor 21 may be considered accurate. It is important to note that during this transition period, often referred to as the "response time" or T90 time of the temperature sensor 21, the temperature measurements are inaccurate. Therefore, a long response time may indicate that the temperature readings from the temperature sensor 21 may be unreliable. Particularly for plastic pipes and lined pipes often used for corrosive fluids, the T90 time can reach between 5 and 60 minutes. This extended delay poses a significant limitation when timely and accurate temperature information is required for process control.

Figure 2 shows a system 10 for determining a temperature of a medium 13 within a pipe 12 according to the invention. The system 10 in this case comprises a first temperature sensor 21, a second temperature sensor 23, and a third temperature sensor 22. The three temperature sensors 21,22, and 23, are provided within a holding element 11. The three temperature sensors 21, 22, and 23 are arranged at different angular positions on the circumference of the pipe 12, as indicated by the arrows extending from the temperature sensors 21, 22, and 23 towards the holding element 11 around the pipe 12. This arrangement may allow each of the temperature sensors 21, 22, and 23 to measure temperature data from distinct points along the circumference of the pipe 12, for example. The holding element 11, which may be ring-shaped or designed to fit around the pipe 12, houses the three sensors in such a way that they are evenly distributed in an angular pattern around the pipe's 12 outer wall. In this example the three temperature sensors 21,22, and 23 are evenly arranged at a radial distance from the pipe. The first temperature sensor 21 is arranged radially inwards, meaning towards the pipe 12 of the holding element 11. Therefore, the first temperature sensor 21 is configured to monitor the temperature on the outer surface of the pipe 12. In this example, the first temperature sensor 21 is part of the holding element 11. However, first temperature sensor 21 does not have to be part of the holding element. The second temperature senor 22 is provided at an outer surface of the holding element 11. The second temperature sensor 22 is therefore configured to monitor an ambient temperature of the pipe 12 and/or the temperature on the outer surface of the holding element 11. The third temperature sensor 23 is provided at a radial distance from the first temperature sensor 21 within the holding element 11. The third temperature sensor 23 is configured to monitor the temperature within the holding element 11. This may be to measure a temperature gradient, or an axial propagation of a temperature, for example. The third temperature sensor 23 may be provided at any position within the holding element 11 to measure a temperature within the holding element 11.

The holding element 11, which may be a ring-shaped component, such as a sleeve, or housing made of insulating material, for example, may be arranged around the outer surface of the pipe 12. The holding element 11 may not only hold the temperature sensors 21, 22, and 23 but may also provide thermal insulation, e.g., to reduce external thermal influences, enhancing the accuracy of the measurements, for example. Therefore, the holding element 11 may be a pipe insulation, for example and the three temperature sensors 21, 22, and 23 may be distributed within the insulation of the pipe 12. In some implementations, the holding element 11 may be made of the same material as the pipe 12 or from a material with known thermal properties to simplify the modeling process. This configuration may allow for secure placement of the temperature sensors 21, 22, and 23 at predetermined positions, ensuring consistent measurements, for example. Each of the temperature sensors 21, 22, and 23 may measure the temperature at its respective location. These measurements may be continuously or periodically transmitted to a data processing system 50, as shown in Fig. 4, which may process the data using a First Principal AI (FP-AI) or a Physics-Informed Neural Network (PINN), for example. The holding element 11 may comprise a communication element for communication with the temperature sensors 21, 22, and 23, for example. The data processing system 50, as shown in Figure 4, may be in communication with the temperature sensors 21, 22, and 23, or the communication element of the holding element 11. This data processing system 50 is configured to receive the measurement data from the temperature sensors 21, 22, and 23 and processing it using the FP-AI. The FP-AI integrates the temperature data from all three temperature sensors 21, 22, and 23 with known physical parameters of the pipe 12, such as geometry, thermal conductivity, specific heat capacity, and density, as well as relevant physical equations governing heat transfer. In this example, the three sensors 21, 22, 23 are radially distributed at an equal distance from the surface of the pipe 12, located within or at a holding element 11.

This system 10 may enable precise measurement of the temperature differences caused by thermal conduction between the different layers of the system, for example. The holding element 11 may serve either as a thermal insulator or as a mechanical connecting element with defined thermal properties, for example. The material may vary depending on the application, for example plastic or stainless steel with insulating properties. For example, if the pipe 12 has a low thermal conductivity, such as PTFE, using PTFE for the holding element 11 too may create a homogeneous thermal environment, simplifying the modelling of heat transfer dynamics and enhancing the accuracy of temperature estimations, for example. However, other constellations are conceivable. For example, the pipe 12 may be made of plastic (e.g., PTFE), while the holding element 11 may be made of metal, or vice versa. This configuration may introduce new dynamics into the heat transfer process, which must be carefully considered when calculating the medium's temperature. However, by inputting parameters such as the thermal conductivity, specific heat capacity, and density of each material, the FP-AI may accurately model how heat propagates through the differing thermal conductivities of the pipe 12 and holding element 11. This comprehensive modelling may ensure that the FP-AI accounts for the varying rates of heat transfer, maintaining high accuracy in temperature estimations despite the complex thermal dynamics introduced by the material differences.

In this example, three temperature sensors 21, 22, and 23 are arranged at different angular positions around the pipe 12. This spatial distribution may allow the detection of any temperature gradients or asymmetries caused by external environmental factors or uneven heating, for example. However, the system 10 described for determining the temperature of a medium 13 inside a pipe 12 and/or the inner surface temperature of the pipe 12 may be performed with only two temperature sensors 21, 22. In this configuration, the first temperature sensor 21 may be arranged directly on the outer surface of the pipe 12, for example. This temperature sensor 21 may measure the temperature of the pipe 12 on the outer surface, which may be influenced by the internal medium 13 temperature. However, due to the thermal properties of the material of the pipe 12, this influence may be delayed, which makes direct measurement of the medium 13 temperature difficult. Therefore, the second temperature sensor 22 may be arranged at a certain distance from the outer wall of the pipe 12, for example inside the holding element 11 or ring fitted around the pipe 12. This second temperature sensor 22 may measure the temperature at its position, which may be influenced by both the heat transfer from the pipe 12 and the ambient temperature. This arrangement may allow the two temperature sensors 21, 22 to record temperature data at different points along the heat flow from the medium 13 to the ambient surroundings, for example. By utilizing these two temperature sensors 21, 22, the temperature difference between the wall of the pipe 12 and the ambient surroundings may be captured, for example. The physics-informed neural network (PINN) then may use this measurement data to estimate the temperature of the medium. 13 However, utilizing a third temperature 23 sensor may allow for creating a more detailed temperature profile and better capturing spatial temperature differences, for example. With this additional information, the PINN may perform more precise calculations since it has more data to model the temperature distribution and heat flows within the system 10. Thus, the system 10 with three temperature sensors 21, 22, and 23 may offer higher measurement density and thus better detection of temperature gradients and possible asymmetric heat losses, for example. The cross-section in Fig. 2 illustrates the placement of the holding element 11 around the circumference of the pipe 12.

There may be more than three temperature sensors 21, 22, 23 involved to determine a temperature of a medium 13 within a pipe 12. This may mean a possible sensor configuration may involve additional temperature sensors that may be arranged within the holding element 11 to capture radial and/or axial temperature gradients mor effectively, enabling more detailed measurements of temperature distribution within the system 10, for example. The temperature sensors 21, 22, 23 may vary in their positioning along the circumferential direction and do not necessarily need to be evenly spaced, as illustrated in Figure 2. For example, it may be possible for the third temperature sensor 23 to be positioned distally of the pipe 12, while the first temperature sensors 21 and second temperature sensors 22 may be positioned proximally. This may allow for flexible configurations tailored to the specific requirements of the measurement environment. It may also be conceivable that the first and second temperature sensors (21, 22) may be positioned along the upper section of the pipe (12) in the circumferential direction, while the third temperature sensor (23) may be positioned along the lower section of the pipe (12). All configurations are conceivable, enabling the system 10 to adapt to various pipe 12 geometries, thermal dynamics, or measurement challenges, for example. The temperature measurement system 10 may be designed to be highly adaptable, allowing for various configurations to suit different application requirements and environmental conditions. This flexibility may ensure that the system 10 may be customized to achieve optimal performance in a wide range of scenarios.

In contrast to the system depicted in Figure 1, the system 10 for determining a temperature of a medium 13 within a pipe 12 according to the invention may leverage the PINN to model heat transfer dynamics within the pipe 12 accurately. By integrating real-time sensor data with physical laws governing heat transfer, the system 10 may infer the temperature of the medium 13 much more rapidly than traditional methods, for example. Experimental results have shown that, for a 3 mm thick PTFE pipe 12, the system 10 may reduce the T90 response time from over 15 minutes to approximately 3 minutes. This significant improvement in response time may enable automation systems to make more timely and reliable decisions based on the temperature readings, for example. The system 10 may be particularly advantageous in industries where non-invasive measurements are essential, such as in pipelines carrying corrosive fluids, hydrogen, or in applications involving plastic or lined pipes, for example.

Figure 3 shows a method 100 for determining a temperature of a medium 13 within a pipe 12 and/or an inner surface temperature of the pipe 12. In a first step 102, temperature measurement data, wherein the temperature measurement data is indicative of a temperature of a medium within a pipe and/or a surface temperature of the pipe 12, measured by a first temperature sensor 21, and further indicative of an ambient temperature of a surrounding of the pipe 12, measured by a second temperature sensor 22 is obtained. The first temperature sensor 21 may be arranged at or adjacent the outer surface of the pipe 12, for measuring the surface temperature of the pipe 12. This placement may ensure that it captures the immediate thermal influence of the medium flowing inside the pipe, as heat is conducted through the wall of the pipe to the external environment. The second temperature sensor may be arranged in the ambient environment surrounding the pipe 12, for example. This may be at or on the top of a holding element 11, for example. For uninsulated pipes 12, the first temperature sensor 21 and the second temperature sensor 22 may be arranged both at the outer surface of the pipe. For example, the first temperature sensor 21 may measure the outer surface temperature of the pipe 12 and the second temperature sensor, located downstream of the first temperature sensor 21, may measure the ambient temperature of the surroundings of the pipe 12 and/or the temperature of the outer surface temperature of the pipe 12.

In a second step 103, the temperature measurement data is processed by a First Principal AI, FP-AI, wherein the processing by the FP-AI includes a partial differential equation (PDE). The FP-AI may leverage PDEs to model and analyze the heat transfer dynamics within the pipe 12. One of the one or more computer elements of the computer programs 40 may be an AI/ML component, precisely a FP-AI. The FP-AI may be implemented using a physics-informed neural network (PINN) for processing the temperature measurement data and determining the temperature of the medium 13 or the FP-AI may utilize a physics-informed neural network (PINN) for processing the temperature measurement data and determining the temperature of the medium 13. For example, The FP-AI may leverage a Physics-Informed Neural Networks (PINNs), which combine neural network architectures with Partial Differential Equations (PDEs) that model the heat transfer dynamics within the pipe 12. This integration may ensure that the FP-AI model adheres to the established laws of thermodynamics and accurately simulates the thermal behavior of the system 10, for example. The FP-AI may estimate the internal temperature of the medium 13 within the pipe 12 and/or the inner surface temperature of the pipe 12 based on external measurements. For example, by embedding a heat conduction equation, a fundamental PDE, e.g., in cylindrical coordinates appropriate for pipes, the FP-AI may accurately model how heat transfers from the medium 13 inside the pipe 12 through the wall of the pipe 12 to the external environment. The FP-AI may receive the temperature measurement data from the first temperature sensor 21 and the second temperature sensor 22. Using these inputs, the FP-AI may employ numerical methods, such as finite element or finite difference methods, to solve the PDEs, for example. The thermal properties of the pipe 12 material (thermal conductivity, specific heat capacity, density) and geometric parameters (inner and outer diameters, wall thickness) may be incorporated into the model to enhance accuracy. Additionally, environmental parameters like the heat transfer coefficient, wind speed, and humidity may be considered to account for convective and radiative heat losses, for example. By integrating PDEs with machine learning algorithms, the FP-AI may ensure that temperature estimations are both data-driven and physically consistent, for example.

In a third step 104, the temperature of the medium and/or an inner surface temperature of the pipe from the processing by the FP-AI is determined. After the FP-AI has processed the temperature measurement data using PDEs, it may generate a thermal model of the temperature flow within the pipe 12. This model may include predictions of how heat is transferred from the medium 13 inside the pipe 12 through the walls of the pipe 12 to the surrounding environment, for example. The FP-AI may solve the inverse heat conduction problem, meaning enabling the determination of internal temperatures based on external temperature sensor data. This may involve inferring the internal temperature of the medium and the inner surface temperature of the pipe by ensuring consistency between the observed temperature gradients and the physical heat transfer dynamics.

Figure 4 schematically shows data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 for determining a temperature of a medium 13 within a pipe 12 as schematically illustrated in Fig. 4. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34. One or more computer elements of the computer programs 40 in the data processing system 50 may form parts of the computer programs 40, e.g., different program code for different functions or steps of the method 100. Specifically, a computer program 40 of one of the data processing apparatuses 30 may be comprising the computer elements which may be in the form of software codes or instructions for the processors 32, for example.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of $\pm$ 10%, and preferably of $\pm$ 5%. The aforementioned deviation from the indicated numerical interval of $\pm$ 10%, and preferably of $\pm$ 5% is also indicated by the terms "about" and "approximately" used herein with respect to a numerical value.

Any reference signs in the claims should not be construed as limiting the scope.

## Claims

1. A method (100) for determining a temperature of a medium (13) within a pipe (12) and/or an inner surface temperature of the pipe (12), the method (100) comprising:

   - obtaining temperature measurement data from at least two temperature sensors (21, 22), wherein the temperature measurement data is indicative of a temperature of an outer surface temperature of the pipe (12), measured by the first temperature sensor (21), and further indicative of an ambient temperature of a surrounding of the pipe (12), measured by the second temperature sensor (22); wherein the at least two temperature sensors (21, 22) are provided within a holding element (11);

- processing the temperature measurement data by a First Principal Artificial Intelligence, FP-AI, wherein the processing by the FP-AI comprises a partial differential equation (PDE) and;

- determining the temperature of the medium (13) and/or an inner surface temperature of the pipe (12) from the processing by the FP-AI.

2. The method (100) of claim 1, wherein the PDE is a heat equation in parameterized form.

3. The method (100) of claim 1 or 2, wherein the FP-AI models a dynamic evolution of temperature of the medium (13) and/or an inner surface temperature of the pipe (12) along a thermal path.

4. The method (100) of any of claim 3, wherein the method (100) is performed periodically and/or iteratively to continuously determine the temperature of the medium (13).

5. The method (100) of any of the preceding claims, wherein the processing by the FP-AI comprises at least one or more of the following: geometry and thermal properties of the pipe (12) and the holding element (11), the position of the at least two temperature sensors (21, 22) within the holding element (11), and fluid parameters of the medium (13).

6. The method (100) of any of the preceding claims, wherein the FP-AI takes into account a measurement noise and statistics in the processing of the measurement data.

7. The method (100) of any of the preceding claims, wherein the determined temperature of the medium (13) is outputted along with an uncertainty score indicative of an estimation accuracy.

8. The method (100) of any of the preceding claims, wherein the temperature measurement data comprises a plurality temperature measurement data obtained at different time points.

9. The method (100) of any of the preceding claims, wherein the first temperature sensor (21) and the second temperature sensor (22) are arranged at an outer surface of the pipe (12).

10. The method (100) of any of the preceding claims, wherein the first temperature sensor (21) is arranged at an outer surface of the pipe (12) and the second temperature sensor (22) is provided within the holding element (11) having surface contact with the outer surface of the pipe (12).

11. The method (100) of claim 10, wherein the temperature measurement data is further indicative of a temperature measured by a third temperature sensor (23), said third temperature sensor (23) being arranged at an intermediate position within the holding element (11) between the first temperature sensor (21) and the second temperature sensor (22), the third temperature sensor (23) providing temperature measurement data which is indicative of a temperature at this intermediate position.

12. The method (100) of any of the preceding claims, wherein the FP-AI is at least partial pre-trained to processes the temperature measurement data.

13. One or more computer program products (34, 40) comprising instructions which, when executed by one or more data processing apparatuses (30), cause the one or more data processing apparatuses (30) to carry out the method (100) of any one of the previous claims.

14. A data processing system (50) configured to carry out the method (100) of any one of claims 1 to 13.

15. The system of claim 14, further comprising:

- a holding element (11) comprising at least two temperature sensors (21, 22), wherein the holding element (11) is provided at the pipe (12).

Fig. 1

Fig. 2

Fig. 3

Fig. 4

## EUROPEAN SEARCH REPORT

Europäisches Patentamt
European Patent Office
Office européen des brevets

**Application Number**

EP 25 15 2233

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/116038 A1 (NORMA GERMANY GMBH [DE]) 6 June 2024 (2024-06-06) * abstract; figures 1,2 * * paragraphs [0001], [0005], [0006], [0018], [0019], [0051] - [0072] * ----- | 1-15 | INV. G01K7/42 G01K13/02 |
| A | GO MYEONG-SEOK ET AL: "Physics-informed neural network-based surrogate model for a virtual thermal sensor with real-time simulation", INTERNATIONAL JOURNAL OF HEAT AND MASS TRANSFER, vol. 214, 1 November 2023 (2023-11-01), page 124392, XP093283116, AMSTERDAM, NL ISSN: 0017-9310, DOI: 10.1016/j.ijheatmasstransfer.2023.124392 Retrieved from the Internet: URL:https://pdf.sciencedirectassets.com/271451/1-s2.0-S0017931023X0012X/1-s2.0-S0017931023005380/main.pdf?hash=9e1d91b25bbb2a54c796c9f5ba444514cc35f7eb7b0e0a089d284956e32d84a3&host=68042c943591013ac2b2430a89b270f6af2c76d8dfd086a07176afe7c76c2c61&pii=S0017931023005380&tid=spdf-7ebf469b-124f-41b5-9c35-c66> * abstract; figure 6 * * paragraphs [0001], [0002], [04.1] * ----- | 1-15 | |

TECHNICAL FIELDS SEARCHED (IPC)

G01K

The present search report has been drawn up for all claims

| Place of search | Date of completion of the search | Examiner |
|---|---|---|
| The Hague | 3 June 2025 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2233

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| WO 2024116038 A1 | 06-06-2024 | CN | 118111588 A | 31-05-2024 |
| | | WO | 2024116038 A1 | 06-06-2024 |

EPO FORM P0459

For more details about this annex : see Official Journal of the European Patent Office, No. 12/82